# EUROPEAN PATENT APPLICATION

(11) **EP 4 596 211 A1**
(43) Date of publication of application: **06.08.2025**
(21) Application number: 23871426.5
(22) Date of filing: 27.07.2023
(51) Int. Cl.: B29C 45/16, B32B 27/00, B32B 27/40

(54) **RESIN MOLDED BODY AND METHOD FOR PRODUCING RESIN MOLDED BODY**

(30) Priority: 30.09.2022 JP 2022157618; 07.10.2022 JP 2022162696
(71) Applicant: Inoac Corporation, Nagoya-shi, Aichi 450-0003 (JP)
(72) Inventor: KONDO, Mitsuhiro, Anjo-shi Aichi 444-1195 (JP)
(74) Representative: Gille Hrabal Partnerschaftsgesellschaft mbB Patentanwälte
(86) International application number: PCT/JP2023/027611
(87) International publication number: WO 2024/070183

(57) **Abstract**

The present invention includes: a resin-containing base material; a first coating layer that is formed on the surface of the base material and that has a thickness of 100-1000 µm; and a second coating layer that is formed on the surface of the first coating layer and that has a thickness of 100-1000 µm.

## Description

### TECHNICAL FIELD

The present disclosure relates to a resin molding and a method for producing the same.

### BACKGROUND ART

Conventionally, there is known a coating method in which a coating layer of a resin molding is formed inside a mold for molding the resin molding (e.g., see Patent Literature 1). Such a coating method is called in-mold coating, and is known as an environmentally friendly coating method capable of reducing the use of volatile organic compounds.

Furthermore, there is also known a resin molding method in which resin materials of two types are integrated using a core-back injection molding device (e.g., see Patent Literature 2).

### CITATION LIST

### PATENT LITERATURE

[Patent Literature 1] Japanese Patent Laid-Open No. 2006-76174
[Patent Literature 2] Japanese Patent Laid-Open No. 2005-88527

### SUMMARY OF INVENTION

### TECHNICAL PROBLEM

Patent Literature 1 does not indicate that two coating layers are formed in the in-mold-coating-based coating method disclosed therein. Furthermore, while Patent Literature 2 discloses a method for integrating two resin layers, Patent Literature 2 does not disclose a method for forming coating layers.

One aim of the present disclosure is to provide a resin molding in which a plurality of coating layers are formed by in-mold coating, and a method for producing the resin molding.

### SOLUTION TO PROBLEM

A resin molding according to the present disclosure includes: a resin-containing base material; a first coating layer that is formed on the surface of the base material and that has a thickness of 100-1000 µm; and a second coating layer that is formed on the surface of the first coating layer and that has a thickness of 100-1000 µm.

Furthermore, a resin-molding production method according to the present disclosure includes: a step of forming a base material by injecting a resin material into a cavity that is formed by first and second molds; a first coating step of forming a first coating layer on the surface of the base material by opening the first and second molds and injecting a first-coating-forming material into between the base material and the first mold; and a second coating step of forming a second coating layer on the surface of the first coating layer by opening the first and second molds again and injecting a second-coating-forming material into between the first coating layer and the first mold.

### ADVANTAGEOUS EFFECTS OF INVENTION

In this resin molding, the first coating layer has a thickness of a coating layer formed by in-mold coating, and the second coating layer also has a thickness of a coating layer formed by in-mold coating.

Furthermore, according to such a resin-molding production method, the first coating layer and the second coating layer can be formed by in-mold coating.

### BRIEF DESCRIPTION OF DRAWINGS

FIG. 1 is a side view of a resin molding.
FIG. 2 is a cross-sectional view taken along A-A in FIG. 1.
FIG. 3 is a schematic diagram of a mold device used for in-mold coating.
FIG. 4 is diagram (1) illustrating a method for producing the resin molding.
FIG. 5 is diagram (2) illustrating the method for producing the resin molding.

### DESCRIPTION OF EMBODIMENTS

In the following, an embodiment of the present disclosure will be described with reference to the drawings.

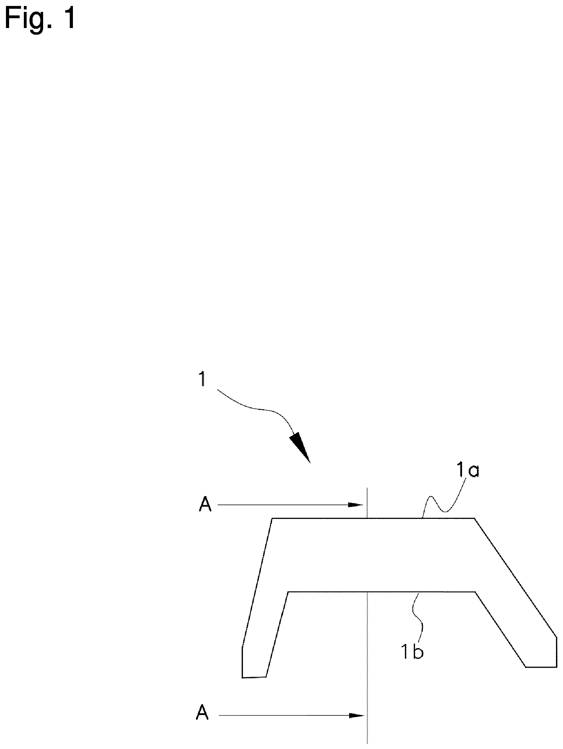

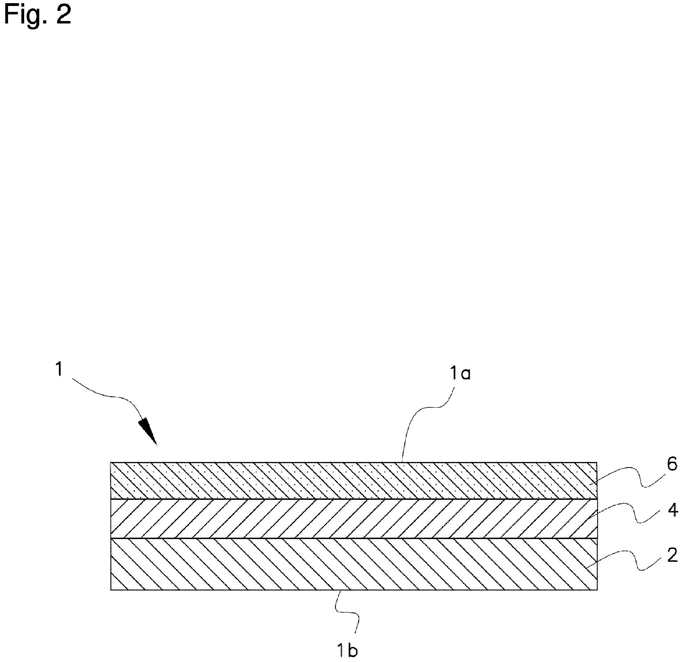

As illustrated in FIGS. 1 and 2, a resin molding 1 includes a base material 2, a first coating layer 4, and a second coating layer 6. In the present embodiment, the resin molding 1 is a resin member to be used as a decorative panel for use in the automobile interior, a bumper, etc. The resin molding 1 has a front surface 1a and a rear surface 1b. When the resin molding 1 is an interior member of an automobile, the front surface 1a of the resin molding 1 is attached facing the users of the automobile. Furthermore, when the resin molding 1 is an exterior member of an automobile, the front surface 1a of the resin molding 1 is disposed facing the outside of the automobile.

The base material 2 is a resin member serving as a base for forming the first coating layer 4. The base material 2 is formed from a thermoplastic resin material. For example, the resin material is polypropylene, polyethylene, acrylonitrile-butadiene-styrene (ABS) resin (ABS copolymer), polycarbonate (PC) resin, or the like.

The first coating layer 4 is a coating layer that is formed on the front-surface-1a side of the base material 2. Specifically, the first coating layer 4 is formed from a first-coating-forming material that is applied onto the surface of the base material 2 by in-mold coating. For example, the first-coating-forming material may include a coating material suitable for in-mold coating disclosed in Japanese Patent Laid-Open No. 06-107750, Japanese Patent Laid-Open No. 08-113761, or the like. Furthermore, in the present embodiment, the first coating layer 4 is a color layer formed from a coating material containing a coloring agent. Note that the first coating layer 4 may contain so-called shiny members formed from metal flakes, mica flakes, glass beads, etc. The first coating layer 4 formed by in-mold coating has a thickness of 100-1000 µm.

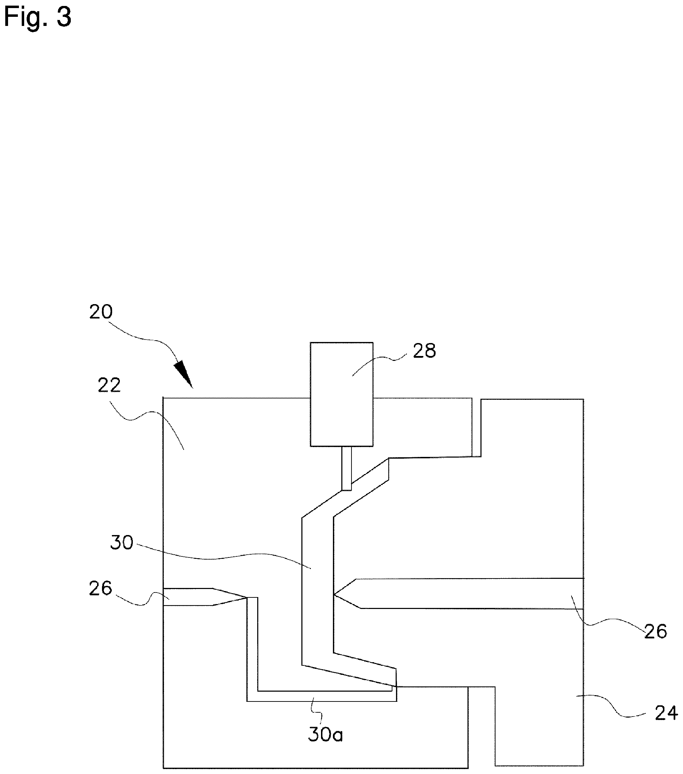

Furthermore, the first coating layer 4 is a coating layer that contains a release agent and/or has a release agent adhering to the surface thereof. That is, the coating material for the first coating layer 4 may contain a release agent. Furthermore, the coating material for the first coating layer 4 may not contain a release-agent component, and a release agent sprayed onto a mold may be layered on the coating surface. The release agent is a chemical agent that prevents the first coating layer 4 from adhering to the later-described first mold 22 (see FIG. 3). The release agent facilitates the separation of molded articles from molds. For example, in the present embodiment, the release agent is a chemical agent containing light naphtha and/or wax. For example, the wax is paraffin wax, microcrystalline wax, or the like. Besides the above, the release agent may contain polydimethylsiloxane. The later-described second coating layer 6 is formed in a state in which the release agent is adhering to the surface of the first coating layer 4 formed by in-mold coating.

The second coating layer 6 is a coating layer that is formed on the surface of the first coating layer 4. The second coating layer 6 contains a coating material that has cured after two different second-coating-forming materials are mixed. In the present embodiment, the coating material forming the second coating layer 6 is a urethane coating material that has cured after polyol (an example of the first material) and isocyanate (an example of the second material) are mixed and reacted. However, as long as the second coating layer 6 contains a coating material that has cured after two or more different materials are mixed, the coating material may be a coating material other than a urethane coating material. The curing includes curing due to a reaction induced by the different materials being mixed, and curing due to a drop in temperature after two different materials have been mixed.

In the present embodiment, the second coating layer 6 is a clear layer that is a transparent coating covering the first coating layer 4. The clear layer has the function of adding gloss to the color of the first coating layer 4. Furthermore, the clear layer also has the function of protecting the first coating layer 4. Thus, in the present embodiment, the second coating layer 6 is formed from a coating material that does not contain any coloring agent or a translucent coating material containing a coloring agent. However, the second coating layer 6 may be formed from any coating material as long as the coating material is a coating material that cures after two different materials are mixed.

The second coating layer 6 has a thickness of 100-1000 µm. In the present embodiment, the thickness of the clear layer constituting the second coating layer 6 is set so as to be equivalent to or thinner than the thickness of the color layer constituting the first coating layer 4.

Next, a method for producing the resin molding 1 will be described with reference to FIGS. 3, 4, and 5. As illustrated in FIG. 3, in the present embodiment, a mold device 20 used for in-mold coating is a resin injection molding device that includes a first mold 22, a second mold24, a resin injector 26, and a coating-material injector 28. The first mold 22 and the second mold 24 form a cavity 30 by being closed. However, the mold device 20 may be any mold as long as in-mold coating can be performed.

The resin injector 26 is a nozzle for ejecting the resin material forming the base material 2 (see FIG. 2). In the present embodiment, the resin injector 26 is disposed on the second mold 24 side of the cavity 30. The resin injector 26 may be disposed facing a supply path 30a. The supply path 30a is connected to the cavity 30. The coating-material injector 28 is a nozzle for injecting the first-coating-forming material and the second-coating-forming material. In the present embodiment, the coating-material injector 28 is disposed on the first mold 22 side of the cavity 30.

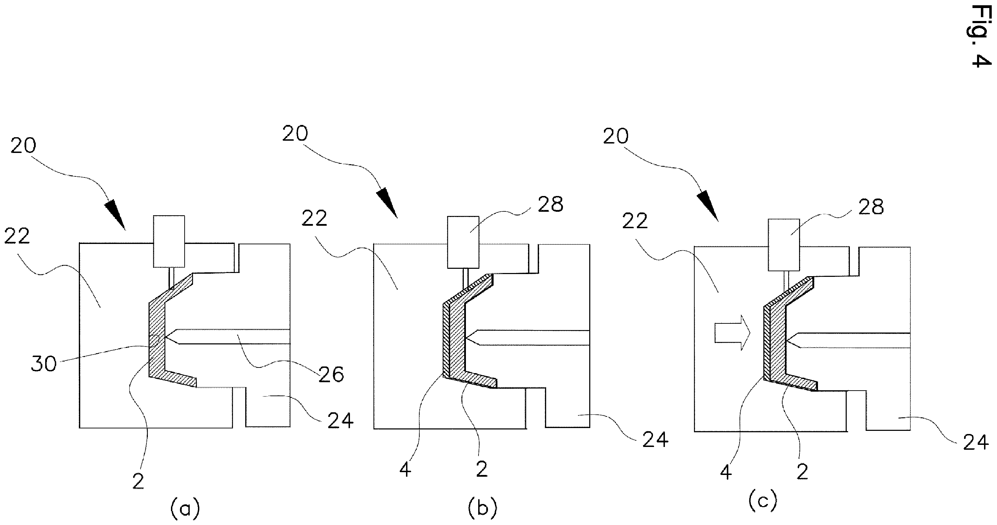

First, as illustrated in FIG. 4A, the base material 2 is formed by the resin material being injected into the cavity 30 from the resin injector 26. Subsequently, the mold device 20 is opened and the second mold 24 is separated from the first mold 22, whereby the first mold 22 is set apart from the base material 2. Furthermore, a release-agent layer is formed by applying the release agent to the surface of the first mold 22 oriented toward the cavity 30. Note that, when the release agent is included in the first-coating-forming material, the release-agent application step may be omitted. Alternatively, when the release agent is not included in the first-coating-forming material, the release agent may be applied to the surface(s) of the first mold 22 and/or the second mold 24 oriented toward the cavity 30 before the base material 2 is formed.

As illustrated in FIG. 4B, upon forming the first coating layer 4, the second mold 24 is separated from the first mold 22 so that the distance between the first mold 22 and the base material 2 is 100-1000 µm. The first-coating-forming material is injected via the coating-material injector 28 into the gap formed between the first mold 22 and the base material 2 (first coating step). Here, the first mold 22 and/or the second mold 24 may be heated to facilitate the flowing of the first-coating-forming material.

As illustrated in FIG. 4C, once the first coating layer 4 is formed, the first mold 22 is moved toward the second mold 24 to compress the first coating layer 4 (see the white arrow in FIG. 4C) (first compressing step). Thus, it can be ensured that the first coating layer 4 adheres tightly to the base material 2. Furthermore, the surface of the first mold 22 can be transferred to the first coating layer 4. Furthermore, as a result of the first coating layer 4 being compressed, sink marks can be prevented from being formed on the surface of the first coating layer 4 due to contraction during the curing of the first coating layer 4. Here, preferably, a first distance by which the first mold 22 is moved toward the second mold 24 is to be changed in accordance with the thickness of the first coating layer 4. Preferably, the thicker the first coating layer 4, the longer the first distance. Thus, the adhesion of the first coating layer 4 to the base material 2 can be facilitated even if the first coating layer 4 is thick. The same also applies to the later-described second coating layer 6.

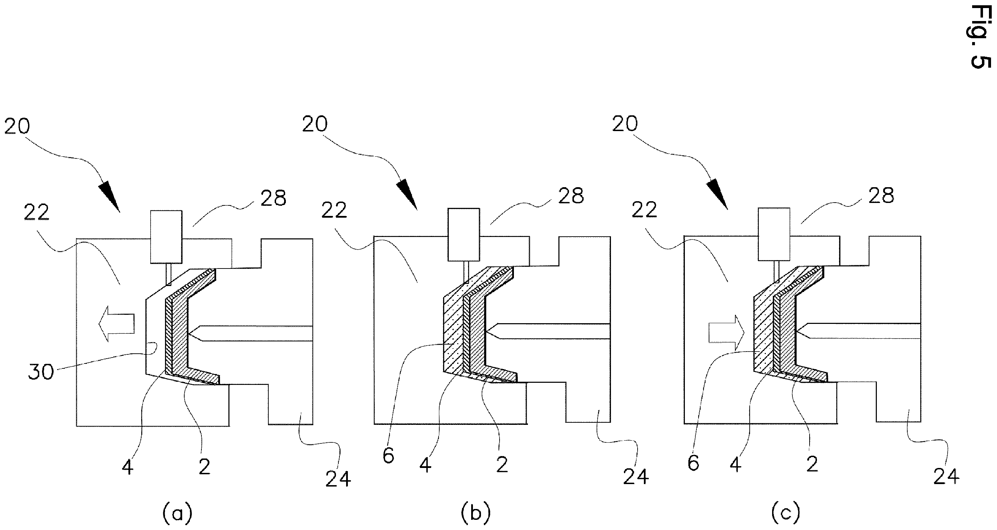

Next, as illustrated in FIG. 5A, the mold device 20 is opened again (see the white arrow in FIG. 5A) so that the first mold 22 is positioned at a distance of 100-1000 µm from the surface of the first coating layer 4. Subsequently, as illustrated in FIG. 5B, the second-coating-forming material containing the two different materials for forming the second coating layer 6 is injected into the cavity 30 (second coating step). Here, the two different materials are mixed at the tip of the coating-material injector 28 and injected. The two materials that have been injected react with one another and cure as a coating material as the materials flow over the surface of the first coating layer 4.

As illustrated in FIG. 5C, once the coating material has cured, the first mold 22 is moved toward the second mold 24 to compress the second coating layer 6 (see the white arrow in FIG. 5C) (second compressing step). Note that, in the present embodiment, the thickness of the second coating layer 6 is set so as to be equivalent to or thicker than the thickness of the first coating layer 4. Due to this, a second distance by which the first mold 22 is moved to compress the second coating layer 6 is equivalent to or longer than the first distance, by which the first mold 22 is moved to compress the first coating layer 4.

Finally, the resin molding 1 is taken out by opening the mold device 20 and separating the first mold 22 from the second mold 24.

As described above, according to such a resin molding 1, the first coating layer 4 and the second coating layer 6 can be formed by in-mold coating. Thus, the use of volatile organic compounds can be reduced compared to when coating layers are formed by application. Furthermore, the second coating layer 6 is formed on the first coating layer 4 by in-mold coating. Thus, a thick coating layer (e.g., a coating layer that has a thickness of 100 µm or more) that cannot be formed by application due to dripping can be formed. Consequently, the durability of the resin molding 1 is improved.

Furthermore, in the method according to the present embodiment for producing the resin molding 1, the first coating layer 4 and the second coating layer 6 are compressed. Thus, the coating layers can be bonded more firmly and made more resistant to peeling. Furthermore, the first coating layer 4 and the second coating layer 6 are produced using the same first mold 22 and the second mold 24. Thus, production cost can be suppressed compared to when separate molds are used.

Furthermore, in the method according to the present embodiment for producing the resin molding 1, the first mold 22 and the second mold 24 are not opened (i.e., the cavity 30 is not opened) until the step of taking out the resin molding 1. Thus, dust, etc., does not adhere to the coating layers. Consequently, the resin molding 1 produced according to such a production method is likely to maintain a good appearance without peeling of the coating films.

### <Other Embodiments>

An embodiment of the present disclosure has been described above; however, the present disclosure is not limited to the above-described embodiment, and various modifications can be made without departing from the spirit and scope of the invention.

For example, the resin molding 1 has been described in the above-described embodiment based on an example of a member to be used in an automobile; however, the present disclosure is not limited to this. The resin molding 1 may be a resin member for applications other than automobiles.

Furthermore, thermoplastic resins such as polypropylene, polyethylene, ABS resin, and PC resin have been mentioned as examples of the resin material forming the base material 2; however, the present disclosure is not limited to this. For example, the base material 2 may be formed from a thermoplastic resin such as polyamide, polyethylene terephthalate, or modified polyphenylene ether or an alloy of such thermoplastic resins, or a resin material obtained by adding a fibrous or flaky filler to such thermoplastic resins. In any case, the base material 2 may be formed from any resin as long as the resin is a thermoplastic resin.

In the above-described embodiment, the first coating layer 4 and the second coating layer 6 are formed between the base material 2 and the first mold 22; however, the present disclosure is not limited to this. For example, the base material 2 may be affixed to the first mold 22 side, and the first coating layer 4 and the second coating layer 6 may each be formed between the base material 2 and the second mold 24 by injecting a coating-forming material after creating a gap between the second mold 24 and the base material 2.

### REFERENCE SIGNS LIST

- 1:: Resin molding
- 1a:: Front surface
- 1b:: Rear surface
- 2:: Base material
- 4:: First coating layer
- 6:: Second coating layer
- 20:: Mold device
- 22:: First mold
- 24:: Second mold
- 26:: Resin injector
- 28:: Coating-material injector
- 30:: Cavity

## Claims

1. A resin molding comprising:
a resin-containing base material;
a first coating layer that is formed on the surface of the base material and that has a thickness of 100-1000 µm; and
a second coating layer that is formed on the surface of the first coating layer and that has a thickness of 100-1000 µm.

2. The resin molding according to claim 1,
wherein at least one of the first coating layer and the second coating layer contains a coating material that has cured after a first material and a second material that is different from the first material are mixed.

3. The resin molding according to claim 2,
wherein the first material is polyol, and the second material is isocyanate.

4. A method for producing a resin molding, the method comprising:
a step of forming a base material by injecting a resin material into a cavity that is formed by first and second molds;
a first coating step of forming a first coating layer on the surface of the base material by opening the first and second molds and injecting a first-coating-forming material into between the base material and the first mold; and
a second coating step of forming a second coating layer on the surface of the first coating layer by opening the first and second molds again and injecting a second-coating-forming material into between the first coating layer and the first mold.
